# EUROPEAN PATENT APPLICATION

(11) **EP 3 145 073 A1**
(43) Date of publication of application: **22.03.2017**
(21) Application number: 15198326.9
(22) Date of filing: 08.12.2015
(51) Int. Cl.: H02P 9/06, H02P 9/10, F01D 15/10, F02C 7/36, H02K 49/04, H02P 3/04, H02K 7/108

(54) **DRIVELINE FOR SUPPLY OF ELECTRICAL ENERGY**

(30) Priority: 21.09.2015 EP 15186024
(71) Applicant: Voith Patent GmbH, 89522 Heidenheim (DE)
(72) Inventor: Mehlich, Andreas, 48429 Rheine (DE)

(57) **Abstract**

Method and driveline used for stabilization of an electrical grid. The driveline for electricity generation comprises controllable power unit. Especially a gas motor or a gas turbine can be used as power unit. Further the driveline comprises a generator for electrical power generation. The generator is connectable to an electrical grid for feeding electrical power into the electrical grid. Between the generator and the power unit a torque limiting coupling is arranged in the driveline. To limit the torque the torque limiting coupling is slipping and a limited torque is provided to the generator.

## Description

### TECHNICAL FIELD OF THE INVENTION

The present invention relates to a driveline for supplying electrical energy. The energy market, especially the European energy market, changes from central power supply to decentral power supply. The electrical energy/ electrical current is delivered by two different producers, controllable energy producer, like power plants, and non-controllable energy producers, like solar power suppliers or wind mill power suppliers.

The changes from the central power supply to decentral power suppliers and the non-controllable energy producer are creating the following electrical faults in the electrical network:
1-, 2- and 3- phase short circuits, electrical voltage fluctuations, micro interruptions in the grid. All these electrical faults can create overloads in the drivelines. The overloads can be between 7.5 times and 16.5 times of nominal torque. In order to prevent electrical voltage fluctuations and power failures, network and system rules for the electrical grid are instituted.

The rules comprise the obligation in case of an unstable network, that the electricity producer must stabilize the grid. For the electricity producers it is not allowed anymore to go off the grid for a specified amount of time. At the moment in dependence of the country it is the obligation to remain at the grid for 150 - 300 ms.

It is an object of the invention to provide electricity producer, which are able to stabilize the electrical grid.

Further it is an object of the invention to safeguard that after a failure the electricity producers are able to feed electrical power into the electrical grid over a predetermined time.

It is a further object of the invention to provide electricity producers, wherein the electricity producers are able to compensate fluctuations of supply with current of non-controllable current producers.

The object of the invention is solved by the features of claim 1, 10 and 11.

To provide a driveline comprising a controllable power unit, it is possible to stabilize a power grid by feeding electrical power into the electrical grid at times of high power consumption of end-users or low feeding of electrical power from non-controllable power units like home solar, solar forms and wind farms. The controllable power unit can be started to compensate the fluctuations of the non-controllable energy producer and at times of high power consumption. Especially a gas motor or a gas turbine is a preferred power unit which can be started on demand. Further a steam turbine can be used as power unit. A torque liming coupling is arranged between the power unit and the generator to avoid a destabilization of the grid in case of a fault. Especially the torque applied to the generator can be limited. Further in case of a fault on the side of the generator, the power unit is protected.

In a preferred embodiment a gearbox is arranged in the driveline between the power unit and the torque limiting coupling. The gearbox provides an adaption of the revolution speed of the driven shaft of the power unit to the needs of the generator and the electrical grid.

In a preferred embodiment the torque limited coupling limits the transmitted torque by slippage.

In a preferred embodiment a frictional coupling is used as torque limiting coupling, wherein the frictional coupling preferable comprises a cooling device. The cooling device supports leading off the heat generated by friction during slippage. In a preferred embodiment the cooling device comprises a liquid cooling unit.

In a preferred embodiment a multi-disc clutch is used as frictional coupling. A multi disc clutch is able to transfer a high torque and to be compact.

In a preferred embodiment the torque limiting coupling limits the transferrable load and comprises disconnecting safety coupling. The disconnecting safety coupling allows a slippage up to a predetermined slipping angle before disconnection. In a preferred embodiment the torque limiting coupling comprises a mechanism to reset the torque limiting coupling after a predetermined number of slippage events or after a predetermined time interval.

In a preferred embodiment the disconnecting safety coupling performs a disconnection in dependence of the rotational speed of the output shaft of the power unit or gearbox and the slippage angle. Thereby it is possible to allow at low speed a smaller slippage angle in comparison to slippage at high speed.

In a preferred embodiment a hysteresis coupling is used as torque limiting coupling. The advantage of a hysteresis coupling is that there is no contact between the surfaces of the interacting parts of the torque limiting coupling. So there is no wear and a slippage angles exceeding 360° and over minutes up to hours are allowable.

Controllable electricity power suppliers comprises a driveline with a controllable power unit, especially a gas motor or a gas turbine, and a generator connectable to an electrical grid for feeding electrical power into the electrical grid and a controller to start the power unit. A torque limiting coupling is arranged between the generator and the power unit to provide a limited torque to the generator.

Method for stabilization of an electrical grid can be used in an environment comprising an electrical grid comprising at least a controllable driveline. The driveline comprises a power unit and at least a generator and a torque limiting coupling arranged between the power unit and the generator. The method for stabilization the grid comprises the steps:
limiting the torque applied to the generator by slipping of the torque limiting coupling when a predetermined torque is exceeded and disconnecting the power unit from the generator by activation of a disconnecting safety coupling in dependence of the duration and/or frequency of slippage.

It is a preferred method to measure the duration and/or frequency of slippage by detection of the temperature increase of the torque limiting coupling. By this temperature measurement it is possible to activate a disconnection to disconnect the power unit form the generator.

Other aspects and advantages of the invention will become apparent from the following description.

### BRIEF DESCRIPTION OF THE DRAWINGS

The invention, together with objects and advantages thereof, may best be understood by reference to the following description of the present preferred embodiments together with the accompanying drawings. The scope of this invention is not limited by these embodiments.
Fig.1: shows a driveline with a slipping clutch
Fig.2: shows a driveline comprising a slipping clutch combined with a safety clutch
Fig.3: shows a slipping coupling comprising a multi-disc clutch as slipping clutch
Fig.4: shows a hysteresis coupling as slipping clutch
Fig.5: shows a torque limiting clutch without a disconnecting mechanism.
Fig.6: shows a twin wallet sleeve as slipping clutch as load limiting clutch
Fig.7: shows a SmartSet safety coupling as slipping and load disconnecting clutch

### DETAILED DESCRIPTION OF THE PREFFERED EMBODIMENTS

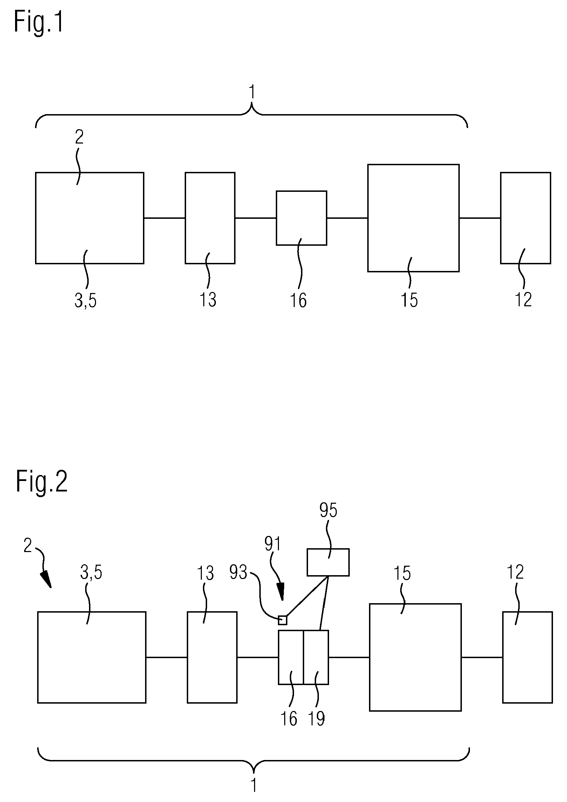

Figure 1 discloses a driveline 1 as electricity producer to feed electrical power into the electrical grid 12. By using a gas turbine 5 or a gas motor 3 or a steam turbine or water turbine as power source this is a controllable energy producer. Especially a gas motor 3 can be started very soon. So an electrical grid can be stabilized by starting this driveline 1.

The driveline 1 comprises a gas motor 3 or a gas turbine 5 as power unit 2/ power source. The rotational movement of the power unit 2 is transferred to a generator 15 to produce electrical current. A gearbox 13 is arranged between the generator 15 and the power unit 2 in the driveline 1 to adapt the rotational speed of the power unit 2 to the generator 15.

The changes from central power generation to decentralized power generation and non-controllable energy producer can create following electrical faults in the electrical network: - 1-, 2- and 3- phase short circuits, electrical voltage fluctuations and/or micro interruptions in the grid. All these electrical faults can create overloads in the drivelines 1. The overloads can be between 7.5 times and 16.5 times of nominal torque. In the consequence to prevent electrical voltage fluctuations and power failures, the electrical driveline 1 must stabilize the electrical grid 12. To stay at the electrical grid 12 a slipping torque limiting coupling 16 is integrated in the driveline 1 as driveline protection between the gearbox 13 and the generator 15.

In the case the driveline does not comprise a gearbox 13 the slipping coupling 16 is arranged between the power unit 2 and the generator 15. By the slipping torque limiting coupling 16 the torque provided by the power unit 2 is limited to a predetermined maximal torque.

In the most cases the failures are of short durations, especially in the range of milliseconds. So the slippage will be only for a short time. By the slippage heat is produced. Because of the very short time of slippage, the time between the slipping events is sufficient long, so that an overheating of the slipping torque limiting coupling 16 will not occur.

Figure 2 discloses an embodiment comprising two couplings, also named clutches, in series. The one coupling is the slipping torque limiting coupling 16. The torque limiting coupling 16 is provided with a temperature sensor 93 as a slippage sensor 91. By the temperature sensor the temperature of the torque limiting coupling is sensed. If the torque limiting coupling 16 slips very often or over a long time, the temperature will exceed a predetermined temperature. So there is the risk of overheating. For example such a long slippage may be the result from a blockage in the power unit 2/gearbox 13 or generator 15. To avoid an overheating of the slipping torque limiting coupling 16 a second coupling 19 is provided. The second coupling 19 is able to execute a disconnection between the power unit / gearbox 13 and the generator 15 on short term. An example of such a second coupling 19 can be a shear pin coupling as a mechanical solution. It is also possible to transfer the measured temperature produced by slippage to a controller 95 and the controller 95 activates a second coupling 19 electrically to provide a disconnection.

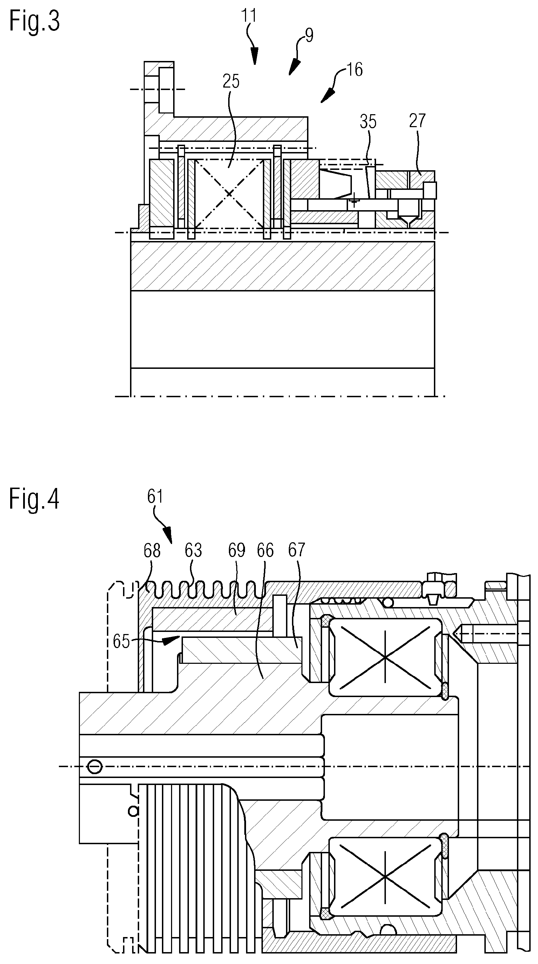

Figure 3 discloses a multi-disc clutch 11 as a slipping torque limiting coupling 16. The multi-disc clutch 11 does not have a mechanism for disconnection of the power unit 2 or gearbox 13 from the generator 15. The multi-disc clutch 11 comprises multi-discs 25 with frictional surfaces, a spring 35 and a readjustment device 27. The multi- disc clutch11 transfers a torque up to a predetermined amount. By exceeding this torque amount, the clutch 11 starts slipping and at maximum the predetermined amount of torque is transferred or less. By the slippage heat is produced. The heat can be discharged by cooling fins of a housing of the multi-disc clutch 11, not shown, or other cooling devices. The readjustment device 27 compensates the abrasion of the frictional surfaces of the multi-disc clutch 11.

Figure 4 shows a hysteresis coupling 61. The hysteresis coupling 61 comprises magnet elements 67 and hysteresis elements 69. An air gap is arranged between the magnetic elements 67 and the hysteresis elements 69. Electrical hysteresis units as a coupling have an extremely high torque range. These coupling 61 can be controlled remotely in case of magnetic flux generated by an electrical current. Since drag torque is minimal, these units offer the widest available torque range of any electromagnetic product. All torque is transmitted magnetically. There is no contact because of the air gap 65, so no wear occurs to any of the torque transfer components providing for extremely long life. When current is applied to the rotor 66, it creates magnetic flux. A hysteresis sleeve 68 comprising the hysteresis elements 69 have the ability to become magnetized depending upon the strength of the flux. This means, as the rotor 66 rotates, magnetic drag between the rotor 66 and the hysteresis sleeve 68 takes place causing rotation. In a sense, the hysteresis sleeve 68 is pulled after the rotor 66. Depending upon the output torque required this pull eventually can match the input speed, giving a 100% lockup.

When current is removed from the hysteresis coupling 61, the armature is free to turn and no relative force is transmitted between both the hysteresis sleeve 68 and the rotor 66. Therefore, the only torque seen between the input and the output is bearing drag.

It is possible to use a magnetic hysteresis coupling, which is equipped with permanent magnets. In the case the applied torque exceeds a predetermined torque the hysteresis sleeve 68 comprising the hysteresis elements 69 will slip and only a part of the applied torque is transferred. As there is no contact, no wear occurs. During slippage heat is generated in the hysteresis coupling 61. The heat can be lead away by cooling fins 63.

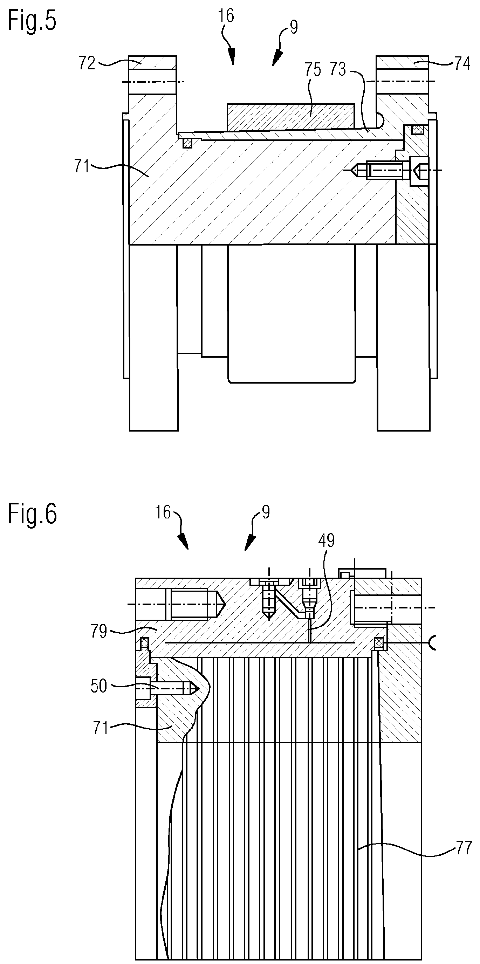

Figure 5 shows a different torque limiting coupling 16. This torque limiting coupling 16 comprises an inner shaft 71. The inner shaft 71 is connected by a flange to the driven shaft of the power unit 2. A wedge shaped sleeve 73 is arranged coaxial to the inner shaft 73. The inner surface of the wedge shaped 73 sleeve is in frictional contact with the outer surface of the inner shaft 71. The wedge shaped sleeve comprises a flange 74 at the far side of the flange 72 of the inner shaft 71. The wedge shaped sleeve 73 is surrounded by an outer pressure ring 75. By positioning of the wedge shaped sleeve 73 and the outer ring 75 a predetermined frictional engagement can be chosen. So the maximum torque transferrable over this coupling is limited and predetermined.

In figure 6 a further embodiment of a torque limiting coupling 16 is disclosed. This torque limiting coupling 16 is a frictional coupling 9. The torque limiting coupling 16 comprises an inner shaft 71. The inner shaft is furnished with grooves 77. A twin wallet sleeve 79 is arranged coaxial to the inner shaft 71 and surrounds the inner shaft 71. The twin wallet sleeve 79 comprises a pressure fluid inlet 49. By filling the twin wallet sleeve 79 up to a predetermined pressure, the frictional engagement of the inner shaft 71 and the outer twin wallet sleeve 79 is limited up to a predetermined torque. If the applied torque exceeds the predetermined torque, a slippage between the inner shaft 71 and the twin wallet outer sleeve 79 occurs. The inner shaft 71 comprises a second fluid inlet 50 to apply fluid between the outer surface of the inner shaft 71 and the inner surface of the twin wallet sleeve 79. The second inlet 50 is used to introduce fluid to reduce the frictional engagement. If a long slippage is detected, which indicates an overload situation, a strong reduction of the frictional engagement is reached by introduction of fluid through the second fluid inlet 50. By exchanging this fluid, a cooling unit is integrated. If the overload situation is not detected anymore, the second fluid inlet is not pressurized any more. The fluid will move out through the second inlet 50 because of the force applied by the twin wallet sleeve. The frictional engagement between the outer surface of the inner shaft 71 and the inner surface of the twin wallet sleeve79 will be reestablished by squeezing out the fluid.

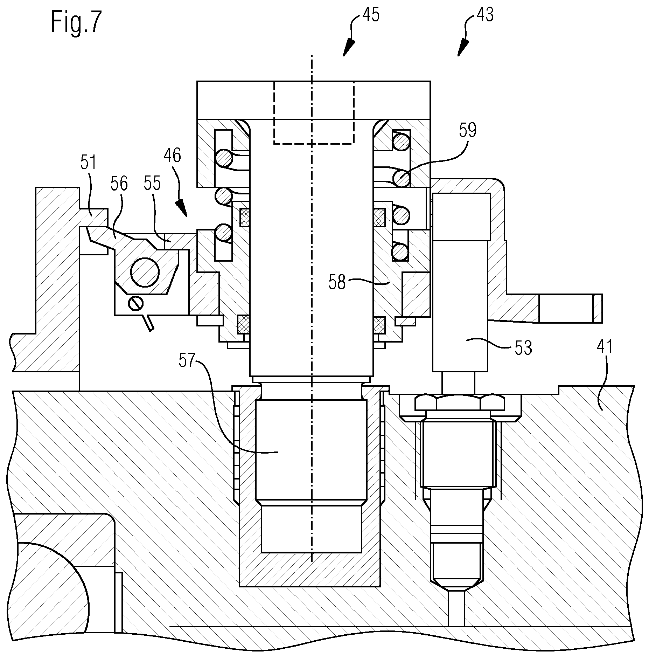

In figure 7 a SmartSet coupling of the company Voith as torque limiting coupling 16 is disclosed. The SmartSet coupling is described in the brochure cr421 en, with the title "Torque limitng coupling. Safeset, SmartSet and Autoset". The disclosure of the brochure is included by reference.

The SmartSet 43 is a process improving coupling with controlled slip. It has the ability to slip without releasing to reduce short duration and dynamic torque peaks. SmartSet improves processes and maximizes the output of the application by functioning as an adjustable peak shaver. It can reduce system transient torques with short slippages, without releasing. It can be adapted for start-ups or continuous drives that experience many short peaks. The technology is the same as for the SafeSet coupling, but it is equipped with a centrifugal device 45 named Autoreset device that will give the coupling an additional slip feature. This centrifugal device 45 is activated by the rotational speed of the intended application. This enables the coupling to slip during high transient torques. If the torque peak is of long duration in an overload situation, like a complete blockage, the SmartSet coupling can fully release as a normal SafeSet coupling and subsequently save the driveline from catastrophic failure.

The centrifugal device 45 of the SmartSet comprises a shaft 57, a centrifugal unit 46 preloaded by a spring 59, a radial moveable sleeve 58, a main lever 55, a stop lever 56 rotatable mounted on the main lever 55 and preloaded by a spring. The rotational movement of the stop lever 56 is limited by a stop, wherein the stop is arranged at the main lever 55. Further the main lever 55 comprises an opening for receiving a shear tube 53. The main lever 55 is mounted pivotable and radial movable on the shaft 57 of the centrifugal device 45. In the case the main lever 55 pivots the shear tube 53 shears off and the oil pressure drops off and the frictional surfaces of the driven and driving elements separates. A pivot of the main lever 55 is activated by a shifting gate 51 with release projections. If the SmartSet device is mounted on the driving element, the shifting gate 51 with the release projection is fixed in respect of the driven element. So a shear off of the shear tube will take place in the case of slippage over a predetermined angle.

Further torque limiting couplings are well known in the market. For example the company MAYR offers torque limiting couplings named EAS.

### REFERENCE LIST

- 1: energy provider, driveline
- 2: controllable power unit
- 3: gas motor
- 5: gas turbine
- 9: frictional coupling
- 11: multi-disc clutch
- 12: electrical grid
- 13: gearbox
- 15: generator
- 16: torque limiting coupling
- 19: disconnecting safety coupling; second coupling
- 25: multi discs
- 27: readjusting device
- 35: spring
- 43: SmartSet coupling
- 45: centrifugal device
- 46: centrifugal unit
- 49: pressure fluid inlet,
- 50: 2^{nd} fluid inlet
- 51: shifting gate
- 53: shear off tube
- 55: main lever
- 56: stop lever
- 58: radial movable sleeve
- 61: hysteresis coupling
- 63: cooling fins, cooling device
- 65: air gap
- 66: rotor
- 67: magnet elements
- 68: hysteresis sleeve
- 69: hysteresis elements
- 71: inner shaft
- 72: flange of inner shaft
- 73: wedge shaped sleeve
- 74: flange of wedge shaped sleeve
- 75: outer pressure ring
- 91: slippage sensor
- 93: temperature sensor
- 95: controller

## Claims

1. Driveline (1) for electricity generation comprising a controllable power unit (2), especially a gas motor (3) or a gas turbine, and a generator connectable to an electrical grid for feeding electrical power into the electrical grid,
**characterized in that**
a torque limiting coupling (16) is arranged in the driveline (1) between the generator(15) and the power unit (2).

2. Driveline (1) of claim 1,
**characterized in that**
the driveline (1) comprises a gearbox (13) arranged between the power unit (2) and the torque limiting coupling (16).

3. Driveline of one of the previous claims,
**characterized in that**,
the torque is limited by slippage of the torque limiting coupling (16).

4. Driveline of one of the previous claims,
**characterized in that**
a frictional coupling (11,9) is used as torque limiting coupling (16), wherein the frictional coupling (9, 11) preferable comprises a cooling device (63).

5. Driveline of claim 4,
**characterized in that**
the cooling device (63) comprises a liquid cooling unit.

6. Driveline of claim 1,
**characterized in that**,
a multi-disc clutch (11) is used as frictional coupling (9).

7. Driveline (1) of one of the previous claims,
**characterized in that**
the torque limiting coupling (16) is a load limiting and disconnecting safety coupling (43), wherein the load limiting and disconnecting coupling (43) provides a slippage up to a predetermined slipping angle before disconnection.

8. Driveline of claim 8,
**characterized in that**
the predetermined slippage angle before disconnection is dependent on the rotational speed of the output shaft of the power unit (2).

9. Driveline of one of the previous claims,
**characterized in that**
a hysteresis coupling (61) is used as torque limiting coupling (16).

10. Electricity generation unit comprising a controllable power unit (2), especially a gas motor (3) or a gas turbine (5), and a generator (15) connectable to an electrical grid for feeding electrical power into the electrical grid,
**characterized in that**
a torque limiting coupling (16) is arranged between the generator (15) and the power unit (2).

11. Method for stabilization of an electrical grid, wherein the electrical grid comprises an a driveline of one of the previous claims, the stabilization comprises the step of
a. limiting the torque applied to the generator by slipping of the torque limiting coupling (16) when a predetermined torque is exceeded
b. disconnecting the power unit from the generator by activation of a disconnecting safety coupling (16, 19) in dependence of the duration and/or frequency of slippage.

12. Method of claim 11,
wherein the duration and/or frequency of slippage is detected by an temperature sensor (93) arranged to measure the temperature increase of the torque limiting coupling (16).
